# EUROPÄISCHE PATENTSCHRIFT

(11) **EP 1 262 353 B1**
(45) Veröffentlichungstag und Bekanntmachung des Hinweises auf die Patenterteilung: **16.08.2006**
(21) Anmeldenummer: 02010222.4
(22) Anmeldetag: 16.05.2002
(51) Int. Cl.: B60J 7/00

(54) **Fahrzeugdach mit wenigstens einem verschiebbaren Himmelteil und einem angrenzenden Verkleidungsteil**
Open roof with at least one slidable headliner and an adjacent trim element
Toit ouvrant avec au minimun un panneau de pavillon déplaçable et un élément d'habillage adjacent

(30) Priorität: 28.05.2001 DE 10126070
(43) Veröffentlichungstag der Anmeldung: 04.12.2002
(73) Patentinhaber: Webasto Vehicle Systems International GmbH, 82131 Stockdorf (DE)
(72) Erfinder: Seifert, Wolfgang, 82110 Germering (DE)
(74) Vertreter: Wiese, Gerhard

(56) Entgegenhaltungen:
- EP-A- 0 980 777
- DE-C- 4 041 908
- DE-C- 19 955 710
- FR-A- 2 718 485

## Beschreibung

Die vorliegenden Erfindung betrifft ein Fahrzeugdach mit wenigstens einem längs eines Bewegungspfades verschiebbaren Himmelteil und mit wenigstens einem an das Himmelteil in dessen Schließposition angrenzenden Verkleidungsteil gemäß dem Oberbegriff des Patentanspruchs 1.

Kraftfahrzeuge und andere Fahrzeuge werden häufig mit teilweise lichtdurchlässigen Dachteilen ausgestattet, die, wenn sie transparent sind, den Fahrzeuginsassen einen Ausblick nach außen bieten können oder zumindest die InnenraumLichtverhältnisse verbessern. Um die thermischen Isolationseigenschaften des Fahrzeugdaches bei kalter Außenwitterung verbessern zu können, die Geräuschdämmung bei schnellem Fahrttempo zu verbessern oder sich gegen Blendung zu schützen, ist es generell erwünscht, solche teilweise lichtdurchlässigen Bereiche zum Innenraum abdecken zu können. Dazu werden konventionellerweise - wie beispielsweise aus der DE 40 41 908 C1 bekannt - bereits verschiebbare Himmel benutzt, die dachparallel, in der Regel in Fahrtrichtung oder umgekehrter Fahrtrichtung, zwischen einer geschlossenen Position, in der sie den teilweise lichtdurchlässigen Bereich abdecken, und einer geöffneten Position, in der sie diesen Bereich zumindest zum größten Teil freigeben, verschoben werden können.

Die Erfindung bezieht sich dabei konkret auf den Fall, daß an wenigstens ein verschiebbares Himmelteil in dessen geschlossener Position ein zum Fahrzeughimmel, also der dachseitigen Innenraumverkleidung des Fahrzeugs, gehöriges Verkleidungsteil anschließt, das einen Teil des Daches zum Innenraum abdeckt. Das verschiebbare Himmelteil bewegt sich auf seinem Weg in die geöffnete Position auf die entgegengesetzte Seite dieses Verkleidungsteils. Dabei war es bislang entweder nicht möglich, Himmelteil und Verkleidungsteil in der Schließposition bündig aneinander anstoßen zu lassen oder es war erforderlich, das Himmelteil vor der Verschiebung vertikal zu verlagern, wodurch dessen Führungsschienen eine aufwendigere Form und eine größere Bauhöhe erreichten.

Der Erfindung liegt das technische Problem zugrunde, ein verbessertes Fahrzeugdach des beschriebenen Typs zur Verfügung zu stellen.

Erfindungsgemäß ist hierzu vorgesehen, daß das Verkleidungsteil in zu dem Dach und der Verschieberichtung des Schiebehimmels im wesentlichen senkrechter Richtung verlagerbar ist. Dadurch kann es in senkrechter Richtung verschoben werden, mit dem Effekt, daß, wenn das verschiebbare Himmelteil in der geschlossenen Position ist, eine dem Innenraum zugewandte Außenfläche des Himmelteils und eine dem Innenraum zugewandte Außenfläche des Verkleidungsteils im wesentlichen bündig miteinander abschließen, und daß es außerdem in der senkrechten Richtung so verschoben werden kann, daß das Verkleidungsteil dem Himmelteil für dessen Verschiebebewegung in die geöffnete Position den Weg freigibt.

Aus der DE 35 32 318 und der DE 37 07 697 sind bereits Lösungen bekannt, bei denen ein Himmel neben der dachparallelen Schiebebewegung beim Überführen in die geschlossene Position außerdem eine dazu senkrechte Absenkbewegung durchführt, um eine Bündigkeit des Abschlusses seines Randes gegen andere Himmelteile herzustellen. Dort sind die angrenzenden Verkleidungsteile allerdings fest montiert.

Demgegenüber ist bei der Erfindung vorgesehen, daß das Verkleidungsteil als angrenzendes Teil in zu dem Dach ungefähr senkrechter Richtung beweglich ist, um dem Himmelteil den Weg freizumachen. Das schließt zwar eine zu dem Dach senkrechte Bewegung des Himmelteils nicht notwendig aus, jedoch ist diese mit zusätzlichem Aufwand zu realisieren. Daher ist das Himmelteil vorzugsweise ausschließlich in einer im wesentlichen dachparallelen Richtung zwischen seiner geöffneten und seiner geschlossenen Position beweglich.

Gegenüber dem zitierten Stand der Technik lassen sich dadurch verschiedene Vorteile erzielen, die je nach speziellem Anwendungsfall mehr oder weniger im Vordergrund stehen können. Zum einen ist erfindungsgemäß keine in verschiedenen Ebenen verlaufende Führung für das Himmelteil notwendig, was insbesondere bei einem motorischer Antrieb des Himmelteils mit zwei Bewegungsrichtungen sehr aufwendig ist. Zum anderen läßt sich eine manuelle Führung, falls gewünscht, bei einer im wesentlichen eindimensionalen Bewegung des Himmelteils viel leichter realisieren. Bei den üblichen Griffmulden in Himmelteilen ist es vergleichsweise schlecht möglich, ein Himmelteil auch in anderer als dachparalleler Richtung zu bewegen. Zum dritten kann erfindungsgemäß das Verkleidungsteil, um dem Himmelteil den Weg freizumachen, auf das Dach zu bewegt werden. Dann kann es in dieser angehobenen Position verbleiben, wenn das Himmelteil nicht in geschlossener Position ist, wobei es das abzudeckende Dachteil gut abdecken kann. Wenn jedoch zwischen dem Verkleidungsteil und einem darüberliegenden Dachteil wie beim Stand der Technik ein fester Zwischenraum besteht, durch den das Himmelteil hindurchpassen muß, so wirkt dieser Zwischenraum, d.h. der seitlich an der von dem Himmelteil freigegebenen Öffnung erkennbare Spalt, optisch ungünstig und kann auch den Blick auf ästhetisch unattraktive Dachteile freigeben.

Schließlich können dem Verkleidungsteil erfindungsgemäß auch Formen gegeben werden, die das Dachteil nicht nur zum Innenraum hin flächig abdecken, sondern auch etwas umschließen, indem das Verkleidungsteil an seinem dem Himmelteil in dessen geschlossener Position zugewandten Kante und/oder an der entgegengesetzten Kante eine nach oben gerichtete Auskragung aufweist. Diese würde bei einer am Stand der Technik orientierten Vorgehensweise den Zwischenraum für die Bewegung des Himmelteils verringern und damit zusätzliche Bauhöhe kosten, die gerade bei Fahrzeugdächern häufig äußerst knapp ist. Wenn diese nach oben gerichteten Auskragungen so vorgesehen sind, daß sie weniger stark auftragenden Teilen des abzudeckenden Dachteils zugeordnet sind, so sind sie bei der Erfindung für die Gesamtbauhöhe bei geeigneter Auslegung irrelevant. Hierzu wird auf das Ausführungsbeispiel verwiesen.

Das von dem Verkleidungsteil abgedeckte Dachteil ist vorzugsweise ein statisches Dachbauteil, also nicht nur ein mit dem Himmelteil und eventuellen weiteren spezifischen Dachfunktionen zusammenhängendes Bauteil, sondern ein Strukturbauteil des gesamten Fahrzeugs. Insbesondere kann es sich hierbei um den an der sogenannten B-Säule eines PKW's angeordneten Querträger handeln.

Bei einer bevorzugten Ausführungsform der Erfindung ist vorgesehen, daß das Fahrzeugdach zwei Himmelteile aufweist, wobei der bislang beschriebene als erstes Himmelteil bezeichnet wird.

Das zweite Himmelteil ist dann in seiner geschlossenen Position an der dem ersten Himmelteil in dessen geschlossener Position entgegengesetzten Seite des dann mittleren Verkleidungsteils vorgesehen. Das zweite Himmelteil kann bei einer Bewegung in seine geöffnete Position gegensinnig zu der entsprechenden Bewegung des ersten Himmelteils verschoben werden, so daß die Himmelteile praktisch übereinandergeschoben werden, um jeweils eine Himmelöffnung freizugeben. Bevorzugt ist jedoch, daß beide Himmelteile in der gleichen Richtung geöffnet werden. Insbesondere kann dann vorgesehen sein, daß die beiden Himmelteile in ihren jeweiligen geöffneten Positionen beide Himmelöffnungen freigeben, indem sie an einer dem Verkleidungsteil entgegengesetzten Seite der von dem zweiten Himmelteil in dessen geschlossener Position abgedeckten Himmelöffnung angeordnet sind.

Dort kann ein Himmelteil- Ablagefach vorgesehen sein, das dann vorzugsweise im Heckbereich des Fahrzeugs untergebracht ist. Dieses Ablagefach ist vorzugsweise ebenfalls von einem innenraumseitigen Verkleidungsteil abgedeckt. Günstig ist es, wenn die beiden Himmelteile dort übereinander gelegt werden können, so daß sie dort gleichzeitig Platz finden.

Die Bewegungen der Himmelteile können bei der Erfindung sowohl manuell als auch motorisch betrieben sein. Die technischen Einzelheiten zu solchen Lösungen sind dem Fachmann aus dem einschlägigen Stand der Technik bekannt. Wenn es bei manuellen Lösungen zu Situationen kommen kann, bei denen Himmelteile manuell schlecht erreichbar sind, was etwa für eines der beiden Himmelteile in dem Himmelteil- Ablagefach im Fahrzeugheckbereich gelten kann, so können Mitnahmemechanismen vorgesehen sein, die es ermöglichen, den Schiebehimmel manuell aus dieser Position wieder herauszubefördern. Diese Mitnahmemechanismen können beispielsweise auch an dem anderen Himmelteil vorgesehen sein, so daß dieser das schlecht erreichbare Himmelteil mitnimmt.

Bei der beschriebenen Lösung mit zwei beidseits des mittleren Verkleidungsteils angeordneten Himmelteilen, die im Heckbereich des Fahrzeugs in einem Himmelteil- Ablagefach verstaut werden können, ist vorzugsweise von hinten nach vorne gesehen eine aufeinanderfolgende Anordnung aus dem erwähnten Verkleidungsteil des Ablagefachs, dem zweiten verschiebbaren Himmelteil, dem mittleren Verkleidungsteil, dem ersten verschiebbaren Himmelteil und einem weiteren vorderen Verkleidungsteil zwischen dem ersten Himmelteil und der Windschutzscheibe des Fahrzeugs vorgesehen, so daß diese, jedenfalls im Rahmen ihrer Breite, den gesamten Fahrzeughimmel aufbauen.

Die beschriebene Lösung ist vor allem für Fahrzeuge mit von der Windschutzscheibe bis zum Heckbereich mehr oder weniger glatt durchlaufendem Dach günstig, also für Kombi-Fahrzeuge, Vans, geschlossene Geländewagen oder auch Busse.

Der zumindest teilweise lichtdurchlässige Bereich kann ein Glasdach sein, wobei die Glasfläche natürlich nicht dem gesamten Dach entsprechen muß. Dieses Glasdach oder ein anderes teiltransparentes Dach kann fest sein, also nur zum Ausblick und zur Verbesserung der Innenraumlichtverhältnisse dienen. Es kann sich jedoch auch um ein bewegliches transparentes Dach handeln. Dabei sind sogenannte Spoilerdächer, die oberhalb des Fahrzeugdaches, also außerhalb des Fahrzeuginnenraumes, nach hinten verschoben werden können, oder Ausstelldächer bevorzugt. Eigentliche Schiebedächer, bei denen die Verschiebebewegung des Deckels innerhalb des Innenraums bzw. zwischen Himmel und festem Dach des Fahrzeuges stattfindet, würden jedenfalls bei der beschriebenen Lösung mit den beiden Schiebedächern und dem dazwischen liegenden Verkleidungsteil eine relativ große Ausdehnung dieses Verkleidungsteils in Fahrzeuglängsrichtung erfordern.

Im folgenden wird ein Ausführungsbeispiel der Erfindung beschrieben, das in den beiliegenden Figuren schematisch dargestellt ist. Dabei zeigt:
- Fig. 1: einen schematisierten Längsschnitt durch ein Fahrzeugdach, wobei zwei Himmelteile des Daches geschlossen und ein vertikal bewegbares Verkleidungsteil des Daches abgesenkt ist,
- Fig. 2: eine der Figur 1 entsprechende Darstellung, wobei jedoch das Verkleidungsteil vertikal angehoben ist und beide verschiebbaren Himmelteile in Richtung zu ihrer geöffneten Position verschoben sind, und
- Fig. 3: eine Ansicht, bei der das Verkleidungsteil angehoben ist und beide Himmelteile in einem Himmel- Ablagefach verstaut sind.

In den Figuren ist ein als festes Glasvolldach ausgebildetes Fahrzeugdach 1 eines Kombi-Fahrzeugs dargestellt. Rechts liegt das Heck des Fahrzeugs, links die Windschutzscheibe 2. Das Fahrzeugdach 1 weist im Bereich der A-Säule, der B-Säule und der C-Säule jeweils tragende Karrosserieteile auf, die als Querträger (Querholme) ausgebildet sind und auch als Querspriegel bezeichnet werden. Diese sind mit A, B und C bezeichnet.

Der Dachhimmel des Fahrzeugs ist aufgebaut aus einem den Querträger A abdeckenden vorderen Verkleidungsteil 4, einem sich in seiner geschlossenen Position daran anschließenden ersten verschiebbaren Himmelteil 5, unter dem in den Figuren schematisch der Fahrer dargestellt ist. An das erste verschiebbare Himmelteil 5 schließt sich nach hinten ein unter dem Querträger B angeordnetes mittleres Verkleidungsteil 6 und ein in seiner geschlossenen Position darauf folgendes zweites verschiebbares Himmelteil 7 an, das gemäß den Figuren über den Köpfen der Heckinsassen liegt. Auf dieses folgt ein hinteres Verkleidungsteil 8 eines fahrzeugheckseitigen Himmel- Ablagefachs 9.

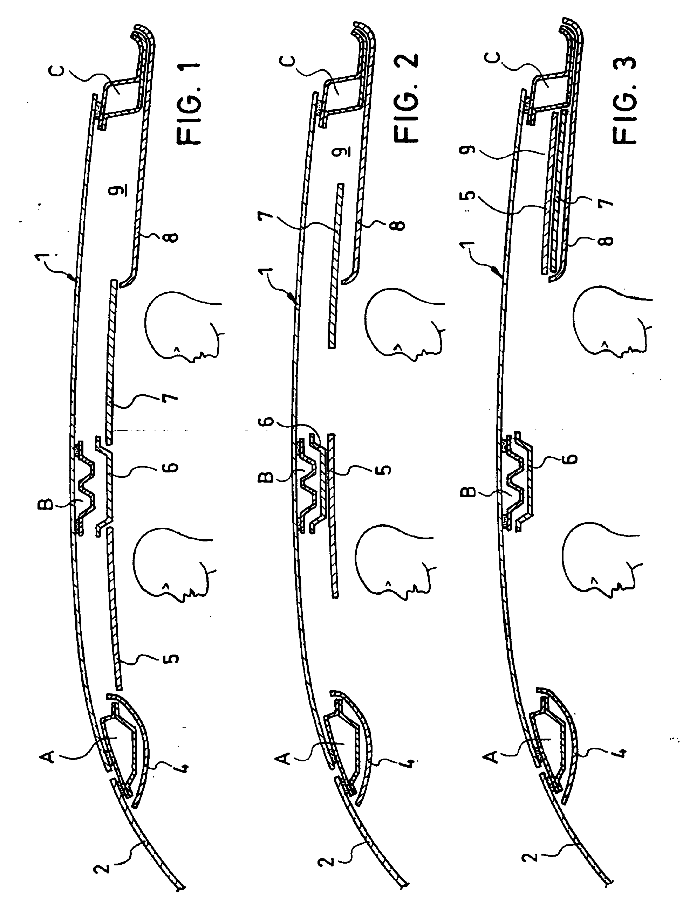

Wie die Figuren 1, 2 und 3 im Vergleich zeigen, ist das Verkleidungsteil 6 vertikal zwischen der in Figur 1 dargestellten Position, in der es bündig mit den beiden verschiebbaren Himmelteilen 5 und 7 in der jeweiligen geschlossenen Position der verschiebbaren Himmelteile abschließt, und einer angehobenen Position, in der das Verkleidungsteil 6 an dem Querträger B anliegt, bewegbar. Das erste verschiebbare Himmelteil 5 kann, wenn sich das Verkleidungsteil 6 in der angehobenen Position befindet, auch unter dem Verkleidungsteil 6 hindurch nach hinten verschoben werden, wozu jedoch das zweite verschiebbare Himmelteil 7, das auf gleichem Höhenniveau läuft, ebenfalls nach hinten verschoben werden muß. Beide Himmelteile 5 bzw. 7 können, wie Figur 3 zeigt, im Heckbereich des Fahrzeugs übereinander abgelegt werden, wobei das zweite verschiebbare Himmelteil 7 unten liegt.

Wenn nur der Glasdachabschnitt zwischen dem Himmelteil 4 und dem Verkleidungsteil 6 geöffnet werden soll, so kann das erste verschiebbare Himmelteil 5 an die Stelle des zweiten verschiebbaren Himmelteils 7, also in dessen geschlossene Position, gefahren werden und das zweite verschiebbare Himmelteil 7 in das Himmel- Ablagefach 9 verschoben werden. Außerdem kann natürlich auch nur das zweite verschiebbare Himmelteil 7 in das Himmel- Ablagefach 9 gebracht werden, so daß nur das Glasdachteil zwischen dem Verkleidungsteil 6 und dem Himmelteil 8 offen ist.

Die Vertikalbewegung des Verkleidungsteils 6 wird vorzugsweise durch eine geeignete mechanische Mitnahmekonstruktion durch die Bewegung des ersten verschiebbaren Himmelteils 5 aus dessen geschlossener Position in Richtung zum Fahrzeugheck hin in Gang gesetzt. Die verschiebbaren Himmelteile 5 und 7 werden manuell verschoben. Wenn das verschiebbare Himmelteil 5 in dem Himmel-Ablagefach 9 liegt, so kann es, was in Figur 3 nicht im einzelnen dargestellt ist, an seinem vorderen Rand noch mit der Hand gefaßt werden. Wenn nur das zweite verschiebbare Himmelteil 7 in dem Himmel- Ablagefach 9 liegt, so gilt dies auch für dieses, so daß sich ein motorischer Antrieb bei diesem Ausführungsbeispiel erübrigt. Ein motorischer Antrieb könnte jedoch auch ohne weiteres vorgesehen sein.

Man erkennt in Figur 1, daß die beiden verschiebbaren Himmelteile 5 und 7 mit dem dazwischen liegenden Verkleidungsteil 6 eine optisch sehr günstige bündige Himmelkonstruktion bilden. Die durch das Himmelteil 8 gebildete Stufe zum zweiten Schiebehimmel 7 liegt im Heckbereich und ist für die Fahrzeuginsassen weniger auffällig. Die Vorderkante des ersten verschiebbaren Himmelteils 5 kann an das Himmelteil 4 so anschlagen, daß sich dort auch ein im wesentlichen bündiger Übergang ergibt. Andererseits deckt das Verkleidungsteil 6 in der angehobenen Position den Querträger B günstig ab, weil es an seiner vorderen und an seiner hinteren Kante jeweils eine nach oben weisende Auskragung aufweist, die den Querträger B teilweise umschließen und damit in den in Figur 2 und 3 dargestellten Situationen praktisch unsichtbar machen.

Zusätzlich zum mittleren Verkleidungsteil 6 können auch das vordere und/oder das hintere Verkleidungsteil 4 bzw. 8 vertikal verlagerbar ausgebildet sein, um beispielsweise ein Himmel- Ablagefach im vorderen oder hinteren Bereich des Fahrzeugdachs 1 freizugeben oder zu verschließen. Die vertikale Verlagerung aller Verkleidungsteile 4, 6, 8 kann dabei nicht nur - wie gezeigt - aus der Schließposition nach oben, sondern auch nach unten erfolgen.

Insgesamt bildet die Erfindung eine einfache und ökonomische Lösung mit guter Variabilität und hervorragendem optischen Erscheinungsbild.

### Bezugszeichenliste

- 1: Fahrzeugdach
- 2: Windschutzscheibe
- 4: (vorderes) Verkleidungsteil
- 5: erstes verschiebbares Himmelteil
- 6: (mittleres) Verkleidungsteil
- 7: zweites verschiebbares Himmelteil
- 8: (hinteres) Verkleidungsteil
- 9: Himmel- Ablagefach
- A: Querträger im Bereich der A-Säule
- B: Querträger im Bereich der B-Säule
- C: Querträger im Bereich der C-Säule

## Patentansprüche

1. Fahrzeugdach mit wenigstens einem längs eines Bewegungspfades verschiebbaren Himmelteil (5, 7) und mit wenigstens einem an das verschiebbare Himmelteil (5, 7) in dessen Schließposition angrenzenden, längs des Bewegungspfades nicht verschiebbaren Verkleidungsteil (4, 6, 8),
**dadurch gekennzeichnet, daß** das wenigstens eine Verkleidungsteil (4, 6, 8) zur Freigabe des Bewegungspfades des Himmelteils oder der Himmelteile (5, 7) senkrecht zur Richtung der Verschiebung des Himmetteils (5, 7) oder der Himmtteile (5, 7) verlagerbar ist.

2. Fahrzeugdach nach Anspruch 1, **dadurch gekennzeichnet, daß** das wenigstens eine Verkleidungsteil (4, 6, 8) aus einer Grundposition, in der es im wesentlichen bündig zu dem benachbarten Himmelteil (5, 7) oder den benachbarten Himmelteilen (5, 7) angeordnet ist, nach oben verlagerbar ist.

3. Fahrzeugdach nach Anspruch 1, **dadurch gekennzeichnet, daß** das wenigstens eine Verkleidungsteil (4 6, 8) aus einer Grundposition, in der es im wesentlichen bündig zu dem benachbarten Himmelteil (5, 7) oder den benachbarten Himmelteilen (5, 7) angeordnet ist, nach unten verlagerbar ist.

4. Fahrzeugdach nach einem der vorhergehenden Ansprüche, **dadurch gekennzeichnet, daß** eines der vertikal verlagerbaren Verkleidungsteil (6) zwischen zwei verschiebbaren Himmelteilen (5, 7) angeordnet ist.

5. Fahrzeugdach nach einem der vorhergehenden Ansprüche, **dadurch gekennzeichnet, daß** das wenigstens eine Verkleidungsteil (4, 6, 8) unterhalb eines das Fahrzeugdach versteifenden Querholmes (A, B, C) angeordnet ist.

6. Fahrzeugdach nach einem er vorhergehenden Ansprüche, **dadurch gekennzeichnet, daß** das wenigstens eine verschiebbare Himmelteil (5, 7) in seiner Schließposition unterhalb eines öffnungsfähigen Dachteils angeordnet ist.

7. Fahrzeugdach nach einem der vorhergehenden Ansprüche, **dadurch gekennzeichnet, daß** wenigstens eines (8) der Verkleidungsteile (4, 6, 8) eine Aufnahme für wenigstens eines der Himmelteile (5, 7) freigibt oder bildet.

8. Fahrzeugdach nach einem der vorhergehenden Ansprüche, **dadurch gekennzeichnet, daß** dessen Dachhaut und/oder in diese eingebettete öffnungsfähige Dachteile zumindestens teilweise aus einem transparenten oder lichtdurchlässigen Material bestehen.

## Claims

1. Vehicle roof having at least one headlining part (5, 7) that can be slid along a movement path and having at least one trim element (4, 6, 8) which cannot be slid along the movement path and adjoins the headlining part (5, 7) that can be slid in the closed position of the latter, **characterized in that**, in order to clear the movement path of the headlining part or the headlining parts (5, 7), the at least one trim element (4, 6, 8) can be displaced at right angles to the direction in which the headlining part (5, 7) or the headlining parts (5, 7) can be slid.

2. Vehicle roof according to Claim 1, **characterized in that** the at least one trim element (4, 6, 8) can be displaced upwards from a basic position, in which it is arranged substantially flush with the adjacent headlining part (5, 7) or the adjacent headlining parts (5, 7).

3. Vehicle roof according to Claim 1, **characterized in that** the at least one trim element (4, 6, 8) can be displaced downwards from a basic position, in which it is arranged substantially flush with the adjacent headlining part (5, 7) or the adjacent headlining parts (5, 7).

4. Vehicle roof according to one of the preceding claims, **characterized in that** one of the vertically displaceable trim elements (6) is arranged between two headlining parts (5, 7) which can be slid.

5. Vehicle roof according to one of the preceding claims, **characterized in that** the at least one trim element (4, 6, 8) is arranged underneath a crossmember (A, B, C) stiffening the vehicle roof.

6. Vehicle roof according to one of the preceding claims, **characterized in that**, when it is in its closed position, the at least one headlining part (5, 7) that can be slid is arranged underneath an opening roof part.

7. Vehicle roof according to one of the preceding claims, **characterized in that** at least one (8) of the trim elements (4, 6, 8) opens or forms a holder for at least one of the headlining parts (5, 7).

8. Vehicle roof according to one of the preceding claims, **characterized in that** its roof skin and/or opening roof parts embedded in the latter consist at least partly of a transparent or translucent material.

## Revendications

1. Toit de véhicule avec au moins un panneau dc pavillon (5, 7) pouvant coulisser le long d'une trajectoire de déplacement, et avec au moins un élément d'habillage (4, 6, 8) ne pouvant pas coulisser le long de la trajectoire de déplacement et adjacent, dans sa position fermée, au panneau de pavillon (5, 7) pouvant coulisser,
**caractérisé en ce que** ledit au moins un élément d'habillage (4, 6, 8) peut être déplacé perpendiculairement par rapport au sens de déplacement du panneau de pavillon (5, 7) ou des panneaux de pavillon (5, 7) pour dégager la trajectoire de déplacement du panneau de pavillon ou des panneaux de pavillon (5, 7).

2. Toit de véhicule selon la revendication 1, **caractérisé en ce que** ledit au moins un élément d'habillage (4, 6, 8) peut être déplacé vers le haut à partir d'une position de base, dans laquelle il est disposé sensiblement à fleur du ou au même niveau que le panneau de pavillon contigu (5, 7) ou des panneaux de pavillon contigus (5, 7).

3. Toit de véhicule selon la revendication 1, **caractérisé en ce que** ledit au moins un élément d'habillage (4, 6, 8) peut être déplacé vers le bas à partir d'une position de base, dans laquelle il est disposé sensiblement à fleur du ou au même niveau que le panneau de pavillon contigu (5, 7) ou des panneaux de pavillon contigus (5, 7).

4. Toit de véhicule selon l'une quelconque des revendications précédentes, **caractérisé en ce qu'**un des éléments d'habillage (6) pouvant être déplacés verticalement est disposé entre deux panneaux de pavillon (5, 7) pouvant coulisser.

5. Toit de véhicule selon l'une quelconque des revendications précédentes, **caractérisé en ce que** ledit au moins un élément d'habillage (4, 6, 8) est disposé en dessous d'une traverse (A, B, C) rigidifiant le toit du véhicule.

6. Toit de véhicule selon l'une quelconque des revendications précédentes, **caractérisé en ce que** le au moins un panneau de pavillon pouvant coulisser (5, 7) est disposé, dans sa position fermée, en dessous d'un élément de toit pouvant s'ouvrir.

7. Toit de véhicule selon l'une quelconque des revendications précédentes, **caractérisé en ce que** au moins un (8) des éléments d'habillage (4, 6, 8) libère ou forme un logement pour au moins un des panneaux de pavillon (5, 7).

8. Toit de véhicule selon l'une quelconque des revendications précédentes, **caractérisé en ce que** sa couverture de toit et/ou des éléments de toit encastrés ou insérés dans celle-ci et pouvant s'ouvrir se compose(nt) au moins partiellement d'un matériau transparent ou translucide.
